# EUROPEAN PATENT APPLICATION

(11) **EP 1 482 393 A2**
(43) Date of publication of application: **01.12.2004**
(21) Application number: 04076945.7
(22) Date of filing: 21.02.2000
(51) Int. Cl.: G06F 1/00

(54) **A portable data storage device**

(62) Divisional of application: 00911548.6
(71) Applicant: Trek 2000 International Ltd, Singapore 508769 (SG)
(72) Inventor: Cheng, Chong Seng, Singapore 507472 (SG); Poo, Teng Pin, Singapore 460044 (SG)
(74) Representative: Howe, Steven

(57) **Abstract**

A portable data storage device (10) includes a universal serial bus (USB) coupling device (1) and an interface device (2) is coupled to the USB coupling device (1). The portable data storage device (10) also includes a memory control device (3) and a non-volatile solid-state memory device (4). The memory control device (3) is coupled between the interface device (2) and the memory device (4) to control the flow of data from the memory device (4) to the USB coupling device (1).

## Description

The invention relates to a portable data storage device, and in particular, a portable data storage device for a computer.

Conventional data storage devices generally fall into two categories. The first category is electronic, solid-state memory devices such as read only memory (ROM) and random access memory (RAM). These memory devices are generally fitted within the computer. They are not intended to be removable or portable so that they may be used on different computers, for example, to permit the transfer of data from one computer to another computer.

The second type of device is surface based data storage devices in which data is stored, typically, on the surface of a disk or tape. Examples of surface storage devices are magnetic disks and CD ROMs. Such data storage devices require a mechanical drive mechanism to be installed in or coupled to the computer to permit the data on the storage device to be read by the computer. In addition, such memory devices are limited by the surface area of the storage device, and the combination of the storage device and the drive mechanism for reading data from the storage device is generally bulky and/or delicate due to the moving parts that are required within the drive mechanism and/or storage device.

In accordance with the present invention, there is provided a portable data storage device comprising a coupling device for coupling to a computer serial bus, an interface device coupled to the coupling device, a memory control device and a non-volatile solid-state memory device; the memory control device being coupled between the interface device and the memory device to control the flow of data from the memory device to the coupling device.

An advantage of the invention is that by providing a portable data storage device comprising a coupling device with an interface device, memory control device and a non-volatile solid-state memory device, it is possible to provide a portable data storage device which may be coupled to a computer having a serial bus port and which does not include moving parts or require a mechanical drive mechanism to read the data from the data storage device.

Preferably, the non-volatile solid-state memory device may be a read/write memory device, such as a flash memory device.

Preferably, where the memory device is a read/write memory device, the memory control device controls the flow of data to and from the memory device.

Typically, the data storage device further comprises a manually operated switch movable between a first position in which writing of data to the memory device is enabled, and a second position in which writing of data to the memory device is prevented.

Preferably, the memc ry control oevice may include a read only memory which stores a program to control the operation of the memory control device. Preferably, the memory control device is a micro-controller.

Typically, the interface device comprises a universal serial bus (USB) driver to convert data between a USB format and a PC format, and the coupling device comprises a USB coupling deivce.

Alternatively, the interface device comprises a driver for IEEE 1394 (Firewire) protocol, and the coupling device comprises a Firewire coupling device.

An example of a data storage device in accordance with the invention will now be described to the accompanying drawings, in which:
Figure 1 is a schematic block diagram of a portable data storage device;
Figure 2 is a flow diagram showing the initial setup of the data storage device by a software supplier;
Figure 3 is a flow diagram showing the initial setup of the data storage device by an end user; and
Figure 4 is a flow diagram showing operation of the data storage device.

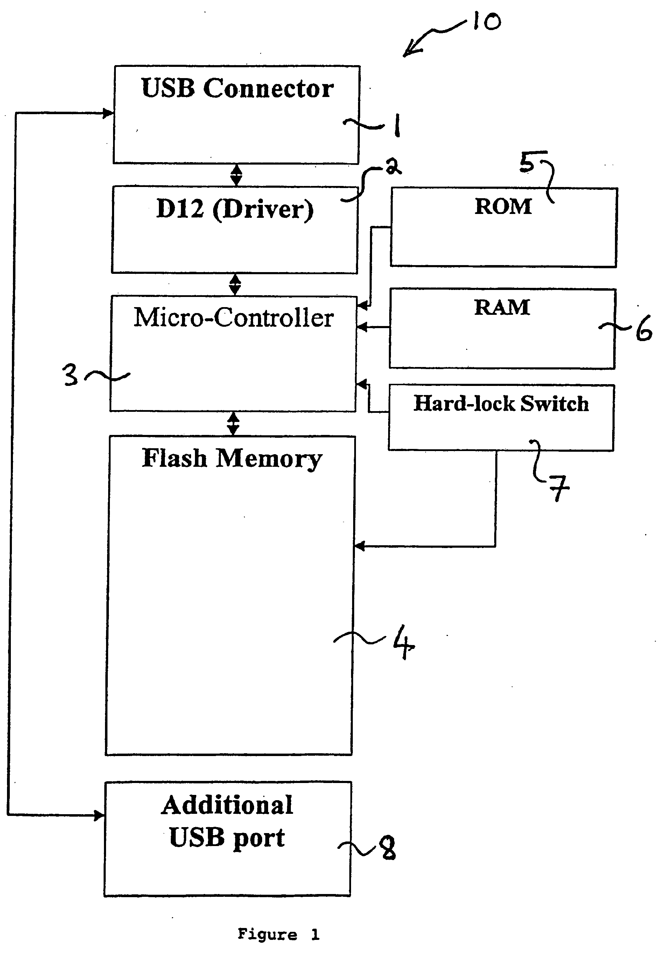

Figure 1 shows a data storage device 10 which includes a USB plug 1 which is coupled to a USB interface device 2. The USB interface device 2 is coupled to a micro-controller 3 which is coupled to a flash memory 4. The micro-controller 3 includes a read only memory (ROM) 5 which stores a program to control the operation of the micro-controller 3.

The operations performed by the micro-controller 3 include comparing passwords entered by a user with a corresponding password stored in the flash memory 4 to determine whether the user is authorised to access the contents of the flash memory 4. The program stored in the ROM 5 also controls the data flow to and from the flash memory 4 and can also detect whether the computer to which the memory device 1 is coupled has installed software programs which correspond to passwords stored in the flash memory 4. The micro-controller 3 can automatically retrieve passwords from the installed software to compare with passwords stored in the flash memory to verify that a user of the computer is authorised to access and run the software. In addition, the program stored in the ROM 5 also permits the setting of a password in the flash memory by a software supplier to correspond to the password contained in software supplied to a user. Typically, the password may correspond to the serial number of the software.

The flash memory 4 is typically divided into a number of different sections or zones. Typically, the flash memory is divided into two zones and each zone has a unique password. If the data storage device 10 is supplied with packaged software, the software serial number can be set in one zone to be the password to permit a user to access and use the software. The other zone, which can be used typically for storing a user's data, may have a separate password which is set by the user. Typically, the passwords are stored in a secure location of the flash memory in an encrypted form. The encryption, decryption, data flow control and USB protocol are all managed by the micro-controller 3.

The micro-controller 3 also includes a random access memory (RAM) 6 which is a temporary storage area to permit functioning of the micro-controller 3. In addition, a manual switch 7 is coupled between the flash memory 4 and the micro-controller 3. The manual switch 7 is movable between a first position in which a user may write data to the flash memory 4 and a second position in which data is prevented from being written to the flash memory 4.

The device 10 also includes a USB socket 8 that is coupled directly to the USB plug 1 and permits other USB devices to be coupled to the USB via the device 10. For example, if a user wishes to increase memory space, a USB plug 1 of a second memory device 10 may be connected to the USB socket 8.

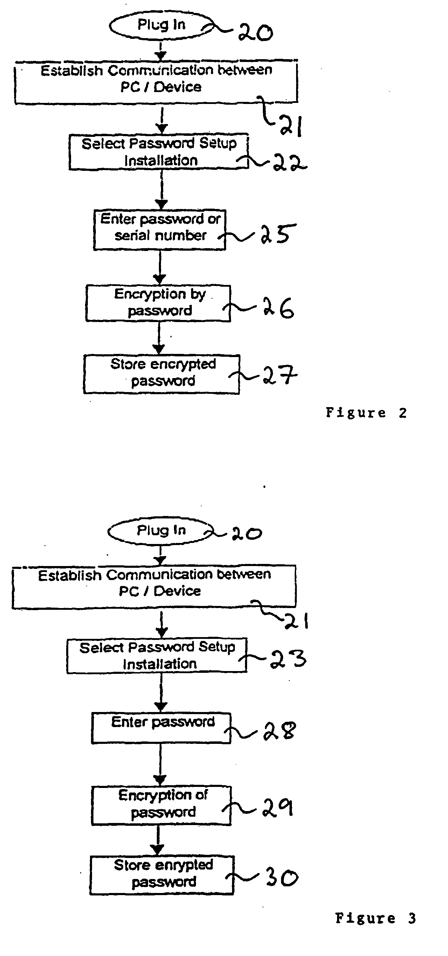

Figure 2 is a flow diagram showing the set up procedure for the device 10 for a software supplier when the software supplier intends to supply the device as an authentication device for the software. Firstly, the plug 1 of the device 10 is plugged into 20 to a USB socket on a computer. After the device 10 has been plugged into the USB socket on the computer, a communication is established 21 between the computer and the device 10. The software supplier has pre-installed installation software on the computer which is run by the operator. From the pre-installed software, the operator selects password set up installation 22, in response to which the pre-installed software requests the operator to enter a password or serial number corresponding to the software with which the device 10 is to be supplied. The password or serial number is then encrypted 26 and stored 27 in the flash memory 4.

Figure 3 is a flow diagram showing the initial set-up of a password for zone 2 of the flash memory 4 by an end user. The device 10 is typically supplied with driver software that is loaded by the user onto the computer prior to set-up of the device. To set-up the password for zone 2 the user plugs in 20 the device 10 into a USB port on the computer and communication 21 is established between the computer and the device 10. The user then runs the driver software and the driver software enters a password installation set-up mode 23 for zone 2. The user then enters 28 a password that they wish to use to prevent unauthorised access to zone 2 of the flash memory 4. The password entered is then encrypted 29 and stored 30 in the flash memory 4.

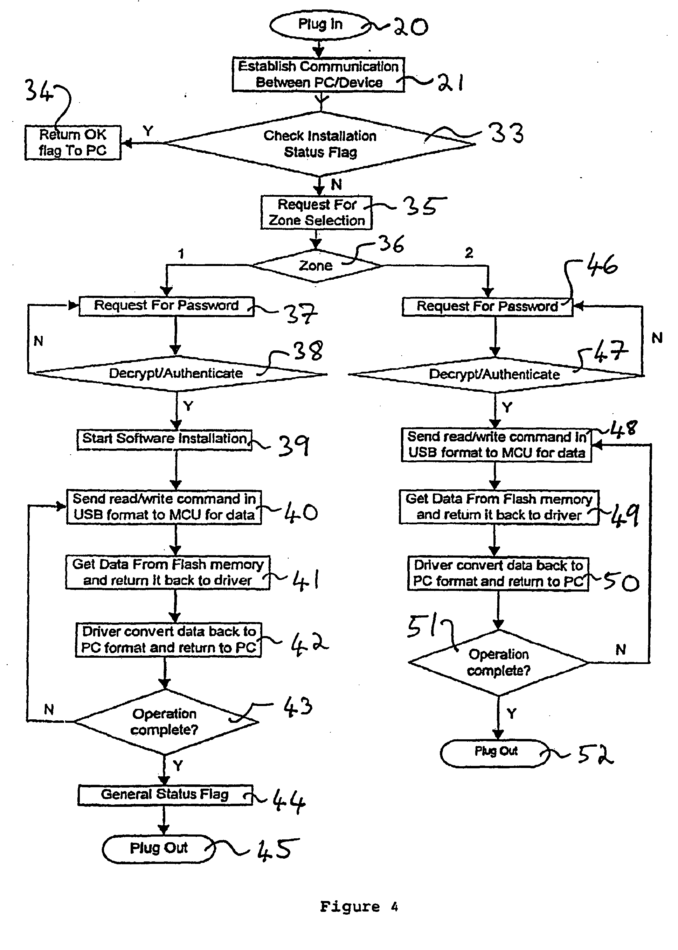

After an end user has performed the initial password set up procedure described above and shown in Figure 3, when a user plugs in 20 the device 10 to a USB port on a computer, the computer will establish a communication 21 with the device 10 and firstly, checks 33 an installation status flag stored in the flash memory 4 (see Figure 4). If the status flag is "Y", the device 10 outputs 34 an "OK" flag to the computer. The micro-controller 3 the instructs the computer to issue a request 35 to the user to select the zone they wish to enter. If the status flag is "N", the device does not output an "OK" flag to the computer, and goes straight to step 35. In response to the request 35 for zone selection, the user selects 36 either zone 1 or zone 2.

If zone 1 is selected, the device 10 assumes that the user wishes to install software on the computer which is stored in the flash memory 4 and requests 37 the appropriate password for confirmation that the user is authorised to install the software. The micro-controller 3 receives the password entered by the user, retrieves the zone 1 password stored in the flash memory 4, decrypts the zone 1 password and compares it with the password entered by the user to authenticate 38 whether the user is authorised to install the software. If the passwords do not match, the device 10 prompts the computer to request 37 the user to enter the password again.

If the password entered by the user matches the password stored in the flash memory 4, the micro-controller 3 starts 39 the software installation from the flash memory 4 to the computer. In order to install software, the computer sends 40 a read/write command in USB format to the micro-controller 3 for data, the micro-controller 3 retrieves the requested data from the flash memory 4 and sends 41 the data to the driver 2. The driver 2 converts 42 the data to PC format and outputs the data to the computer through the USB plug 1. The micro-controller 3 then checks 43 whether the software installation is complete. If the operation is not complete, the operation returns to step 40. If the installation of the software is complete, the status flag stored in the flash memory 4 is changed to "Y" and the device 10 may then be removed 45 from the USB socket on the computer.

If a user selects zone 2, the micro-controller 3 sends a command to the computer to request 46 the user to enter the password for zone 2. When the user enters the password, the computer sends the password to the micro-controller 3. The micro-controller 3 retrieves the password for zone 2 from the flash memory 4, decrypts 47 the password and compares it with the password entered by the user. If the password entered by the user is incorrect, the operation returns to step 46 and the computer requests 46 the user for the password again.

If the password entered by the user is correct, the user has access to zone 2 of the flash memory 4 to read data from the flash memory 4 and to write data to the flash memory 4. However, data can only be written to the flash memory 4 if the manual switch 7 is in the position to permit data to be written to the flash memory 4. In order to read or write data from or to the flash memory 4 a read or write command is sent 48 by the computer in USB format to the micro-controller 3. In response to the read or write command the micro-controller 3 either retrieves 49 data from the flash memory 4 and sends it to the driver 2 for conversion 50 to PC format and then to be output to the computer or receives data from the driver to write it to the flash memory 4.

The micro-controller 3 then determines 51 whether the read or write operation is complete. If the operation is not complete it returns to step 48. If the operation is complete the operation terminates 52.

The device 10 described above is for coupling to a universal serial bus (USB). However, the plug 1, the interface device 2 and socket 8 could be for use with any appropriate computer serial bus. For example, the device 10 could be modified for use with IEEE 1394 (Firewire) protocol by substituting the USB plug 1, USB interface device 2 and socket 8 with a Firewire protocol compatible plug, interface device and socket respectively.

An advantage of the device 10 described above is that it provides a portable data storage device for a computer which does not require a mechanical operated reading/writing device. In addition, the device 10 has no moving parts. This enables to data storage device 10 to be more compact than conventional portable data storage devices.

## Claims

1. A portable data storage device comprising a coupling device for coupling to a computer serial bus, an interface device coupled to the coupling device, a memory control device and a non-volatile solid-state memory device; the memory control device being coupled between the interface device and the memory device to control the flow of data from the memory device to the coupling device.

2. A device according to claim 1, wherein the non-volatile solid-state memory device is a read/write memory device.

3. A device according to claim 2, wherein the read/write memory device is a flash memory device.

4. A device according to claim 2 or claim 3, wherein the memory control device controls the flow of data to and from the memory device.

5. A device according to any of claims 2 to 4, further comprising a manually operated switch movable between a first position in which writing of data to the memory device is enabled, and a second position in which writing of data to the memory device is prevented.

6. A device according to any of the preceding claims, wherein the memory control device comprises a micro-controller.

7. A device according to any of the preceding claims, wherein the coupling device comprises a L niversal serial bus coupling device and the interface device comprises a USB driver.

8. A device according to any of the preceding claims, wherein the coupling device comprises an IEEE 1394 (Firewire) protocol coupling device and the interface device is a Firewire protocol driver.
